# EUROPÄISCHE PATENTSCHRIFT

(11) **EP 3 339 694 B1**
(45) Veröffentlichungstag und Bekanntmachung des Hinweises auf die Patenterteilung: **11.09.2019**
(21) Anmeldenummer: 17206710.0
(22) Anmeldetag: 12.12.2017
(51) Int. Cl.: F16J 15/3208

(54) **DICHTRING EINES TRANSLATORISCH VERSTELLBAREN BAUELEMENTS**
SEALING RING OF A TRANSLATORY COMPONENT
ANNEAU D'ÉTANCHÉITÉ D'UN COMPOSANT RÉGLABLE EN TRANSLATION

(30) Priorität: 20.12.2016 DE 102016225551
(43) Veröffentlichungstag der Anmeldung: 27.06.2018
(73) Patentinhaber: Herbert Hänchen GmbH & Co. KG., 73760 Ostfildern (DE)
(72) Erfinder: Wagner, Klaus, 73262 Reichenbach an der Fils (DE)
(74) Vertreter: BRP Renaud & Partner mbB Rechtsanwälte Patentanwälte Steuerberater

(56) Entgegenhaltungen:
- DE-A1- 3 443 278
- GB-A- 2 005 382
- GB-A- 2 024 365

## Beschreibung

Die vorliegende Erfindung betrifft einen Dichtring eines translatorisch verstellbaren Bauelements gemäß dem Oberbegriff des Anspruchs 1. Die Erfindung betrifft außerdem ein Hydraulikaggregat mit zumindest einem solchen Dichtring.

Gattungsgemäße Dichtringe für dynamische Berührungsdichtungen sind hinlänglich bekannt und dichten relativ zueinander bewegende Bauteile, wie beispielsweise translatorisch hin und her verstellbare Kolben gegen entsprechende Lager, beispielsweise Zylinder, ab. (siehe DE-A-34 43 278) Derartige Dichtringe können innen- oder außendichtend wirken und einfach- oder doppelwirkend ausgebildet sein. Der Vorteil eines derartigen Dichtrings liegt darin, dass er einen nur vergleichsweise kleinen Einbauraum benötigt.

Bei den aus dem Stand der Technik bekannten Dichtringen wird durch eine entsprechende Geometrie an einer Dichtlippe ein Pressungsverlauf erzeugt, der mit einer bestimmten Steigung ansteigt. Der hieraus resultierende Pressungsgradient ist dabei entscheidend für eine Schmierfilmdicke, die unter dem Dichtring herausgefördert wird. Je steiler dabei diese Gradient ist, umso dünner ist dabei der herausgeförderte Schmierfilm. Selbstverständlich ist dabei die Dicke des Schmierfilmes nicht nur von der Dichtungsgeometrie, sondern auch von der Verfahrgeschwindigkeit abhängig und beträgt üblicherweise einige Nanometer. Der herausgeförderte Schmierfilm ist dabei nicht als Leckage anzusehen, da ein modernder Dichtring sogar in der Lage ist, diesen Schmierfilm auch gegen den Druck wieder in einen Druckraum zurück zu fördern. Das gesamte Dichtungssystem ist somit nach außen hin abgedichtet. Um ihre Dichtwirkung entfalten zu können, benötigen derartige Dichtsysteme bzw. solche Dichtringe eine Vorspannung, die üblicherweise durch elastische Elemente, beispielsweise Elastomerringe, aufgebracht wird. Durch die Vorspannung und die daraus resultierende Reibung entsteht jedoch Verschleiß, der langfristig dazu führt, dass der Dichtring hinsichtlich seiner Dichtwirkung nachlässt.

Die vorliegende Erfindung beschäftigt sich daher mit dem Problem, für einen Dichtring der gattungsgemäßen Art eine verbesserte oder zumindest eine alternative Ausführungsform anzugeben, die insbesondere die aus dem Stand der Technik bekannten Nachteile zumindest reduziert.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen komplett neu konzipierten Dichtring anzugeben, der mittels eines faserverstärkten Verstärkungsrings verstärkt bzw. ausgesteift ist, wobei der Verstärkungsring den Dichtring zumindest in Radialrichtung aussteift und eine Verformung zumindest einer Dichtlippe zumindest in Radialrichtung begrenzt. Der erfindungsgemäße Dichtring wird dabei für ein translatorisch verstellbares Bauelement, insbesondere einen Hydraulikkolben oder einen Verschluss, verwendet, beispielsweise entsprechend der DIN 3750, und weist erfindungsgemäß zumindest eine Dichtlippe und den fest mit diesem verbundenen oder in diesem eingeschlossenen und faserverstärkten Verstärkungsring aufweist, der insbesondere benachbart zu der zumindest einen Dichtlippe angeordnet ist. Zugleich weist der Verstärkungsring erfindungsgemäß laminierte Kohlefasern und einen Elastizitätsmodul E2 auf, während der Dichtring aus einem Kunststoff mit einem Elastizitätsmodul E1 ausgebildet ist. Ein Verhältnis der E-Module liegt dabei in einem Bereich von 150 < E2/E1 < 300. Durch diese neuartige Entwicklung hindert der Verstärkungsring den Dichtring und die zumindest eine Dichtlippe, je nach Anordnung, an einer unerwünscht großen radialen Aufweitung oder an einer unerwünscht großen radialen Stauchung, wodurch ein Anpressdruck der zumindest einen Dichtlippe an die relativ hierzu bewegte Dichtfläche ebenso wie der damit einhergehende Verschleiß reduziert werden können. Es ist somit möglich, auch bei sehr schlechter Schmierung im Kurzhubbereich oder bei langer Laufleistung den Verschleiß drastisch zu reduzieren. Durch den erfindungsgemäßen kohlefaserverstärkten Verstärkungsring kann der Verschleiß, beispielsweise im Vergleich zu einem Metallring, so stark minimiert werden, dass nur eine geringe Auswirkung auf das Reibverhalten des Reibpartners, beispielsweise des Zylinders, erfolgt. Eine Dichtwirkung des erfindungsgemäßen Dichtrings ist dabei gegenüber einer Dichtwirkung von konventionellen Dichtringen nicht oder lediglich marginal eingeschränkt. Der Vorteil des erfindungsgemäßen Dichtrings ist, dass bei kurzen Weg-Amplituden (kurze Verfahrwege) keine Mangelschmierung unter der Dichtlippe und somit auch bei hoher Lastwechselzahl kein Verschleiß entsteht.

Bei einer vorteilhaften Weiterbildung der erfindungsgemäßen Lösung beträgt der Elastizitätsmodul E1 des Kunststoffs des Dichtrings ca. 600 MPa. Zusätzlich oder alternativ liegt der Elastizitätsmodul E1 des Verstärkungsrings in einem Bereich von 90.000 MPa < E2 < 180.000 MPa. Hierdurch kann im Gebrauch die Dehnung des Dichtrings bzw. seiner Dichtlippen, das heißt beispielsweise ein Anpressruck auf den Reibpartner (gegenüberliegende Dichtfläche), auf ein Maß begrenzt werden, welches einerseits eine zuverlässige Dichtung ermöglicht, andererseits jedoch einen Verschleiß erheblich reduziert. Der Verstärkungsring ist aus laminierten Kohlefasern ausgebildet.

Bei einer weiteren vorteilhaften Ausführungsform der erfindungsgemäßen Lösung weist der Dichtring eine U-förmige Ausnehmung in der Art einer Ringnut auf, in welcher der Verstärkungsring formschlüssig aufgenommen ist und wobei die Ausnehmung zwischen zwei benachbarten Dichtlippen angeordnet ist. Eine derartige U-förmige Ausnehmung kann beispielsweise mittig an einer Außenfläche des Dichtrings angeordnet sein, so dass in diesem Fall eine außen dichtende und doppelwirkende Dichtung mit zwei direkt zum Verstärkungsring benachbarten Dichtlippen geschaffen werden kann, wobei der Verstärkungsring die Dichtlippen nicht nur in Radialrichtung, sondern auch in Axialrichtung aussteift, da sie sich je nach Hubbewegung an diesem abstützen können. Ein in dieser Weise gestalteter Dichtring kann beispielsweise als Kolbendichtring zwischen einem Kolben und einem Zylinder eingesetzt werden. Alternativ ist selbstverständlich auch denkbar, dass die U-förmige Ausnehmung mittig an einer Innenfläche des Dichtrings angeordnet ist, so dass in diesem Fall ein in dieser Art ausgebildeter Dichtring als innendichtender Dichtring ausgebildet ist und als Stangendichtung zwischen beispielsweise einer Kolbenstange und einem Verschluss eingesetzt werden kann.

Bei einer besonders bevorzugten Ausführungsform liegt ein Verhältnis einer radialen Wanddicke t_{DR} des Dichtrings zu einer radialen Tiefe t_{A} der Ausnehmung im Bereich von 1,5 < t_{DR}/t_{A} < 2,3, insbesondere im Bereich von 1,7 < t_{DR}/t_{A} < 2,2. Zusätzlich oder alternativ liegt ein Verhältnis einer Breite B_{DR} des Dichtrings zu einer Breite B_{A} der Ausnehmung im Bereich von 1,0 < B_{DR}/B_{A} < 2,2, insbesondere im Bereich von 1,7 < B_{DR}/B_{A} < 2,0 liegt. Mittels dieser Verhältnisse lässt sich die Begrenzung der Verformung in einem Druckbereich eines Hydraulikmediums zwischen 20 und 350 bar optimal verwirklichen. Durch die genannten Abmessungen kann dabei erfindungsgemäß der Anpressdruck der Dichtlippen an die gegenüberliegende Dichtfläche auf ein Maß begrenzt werden, bei welchem die Dichtwirkung noch voll entfaltet, ein übermäßiger Verschleiß durch einen zu hohen Anpressdruck jedoch vermieden wird.

Bei einer alternativen und vorteilhaften Ausführungsform des erfindungsgemäßen Dichtrings weist der Dichtring eine einzige Dichtlippe und eine innen oder außenliegende Stufe auf, auf der der Verstärkungsring benachbart zu der Dichtlippe angeordnet ist. Bei einer außenliegenden Stufe kann somit ein außendichtender und einfach wirkender Dichtring mit einer einzigen Dichtlippe geschaffen werden, wobei eine Verbindung des Verstärkungsrings mit dem Dichtring beispielsweise durch eine Verklebung oder eine Verschweißung mit dem Material des Dichtrings erfolgen kann, oder prozessbedingt durch den Herstellungsprozess des Carbon-Wickelverfahrens. Der Kohlefasern aufweisende Verstärkungsring kann demzufolge beispielsweise im Wickelverfahren hergestellt werden.

Bei einer vorteilhaften Weiterbildung der erfindungsgemäßen Lösung ist der Dichtring selbst aus Polytetrafluorethylen (PTFE), Polyoxymethylen (POM), Polyamid (PA), Polyethylen (PE), Polyurethan (PU) oder ultra-hochmolekularem Polyethylen (UHMW-PE) ausgebildet und besitzt dadurch nicht nur eine vergleichsweise hohe Verschleißbeständigkeit, sondern auch eine hohe chemische Beständigkeit gegenüber insbesondere hydraulischen Medien. Je nach eingesetztem Kunststoff muss der Verstärkungsring entsprechend ausgebildet sein, um das erfindungsgemäße Verhältnis der E-Module E2/E1 zu erhalten.

Die vorliegende Erfindung beruht weiter auf dem allgemeinen Gedanken, ein Hydraulikaggregat mit einem in einem ersten Bauelement, beispielsweise einem Zylinder, translatorisch verstellbaren zweiten Bauelement, beispielsweise einem Hydraulikkolben, das/der eine Ausnehmung aufweist, mit einem solchen Dichtring in der Ausnehmung zu versehen und zusätzlich mit einem Elastomerring den Dichtring gegen eine Dichtfläche, insbesondere gegen eine Zylinderlauffläche, vorzuspannen. Außerdem dichtet der Elastomerring den Dichtring sekundär statisch ab. Je nachdem ob es sich bei dem Dichtring um einen außenwirkenden oder innenwirkenden Dichtring handelt, weist dabei der den Dichtring vorspannende Elastomerring einen kleineren Durchmesser oder aber einen größeren Durchmesser auf. Der Elastomerring sichert dabei eine Anpresskraft des Dichtrings und damit der Dichtlippen gegen die gegenüberliegende Dichtfläche und gewährleistet dadurch die gewünschte Dichtigkeit. Je nach Anpresskraft lässt sich dabei auch eine Schmierfilmdicke zwischen dem Dichtring und der gegenüberliegende Dichtfläche, beispielsweise einer Zylinderwandung, einstellen. Eingesetzt wird der erfindungsgemäße Dichtring beispielsweise in einem Hydraulikaggregat an einem Kolben, der über den erfindungsgemäßen Dichtring gegenüber einer Zylinderlauffläche abgedichtet ist. In gleicher Weise kann der erfindungsgemäße Dichtring selbstverständlich auch zwischen einer Kolbenstange des Hydraulikkolbens und einem Verschluss angeordnet werden, wobei sie in diesem Fall als innendichtende Dichtung ausgebildet wäre.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch einen erfindungsgemäßen außendichtenden und doppelwirkenden Dichtring,
- Fig. 2: eine Darstellung wie in Fig. 1 bei einer Anwendung in einem Hydraulikkolben eines Hydraulikaggregats,
- Fig. 3: eine weitere mögliche Ausgestaltung des erfindungsgemäßen Dichtrings bei einer Stangendichtung in einem Hydraulikaggregat,
- Fig. 4: eine Schnittdarstellung durch einen erfindungsgemäßen außendichtenden und doppelwirkenden Dichtring mit Vermaßung,
- Fig. 5: eine Schnittdarstellung durch einen erfindungsgemäßen innendichtenden und einfachwirkenden Dichtring mit Vermaßung.

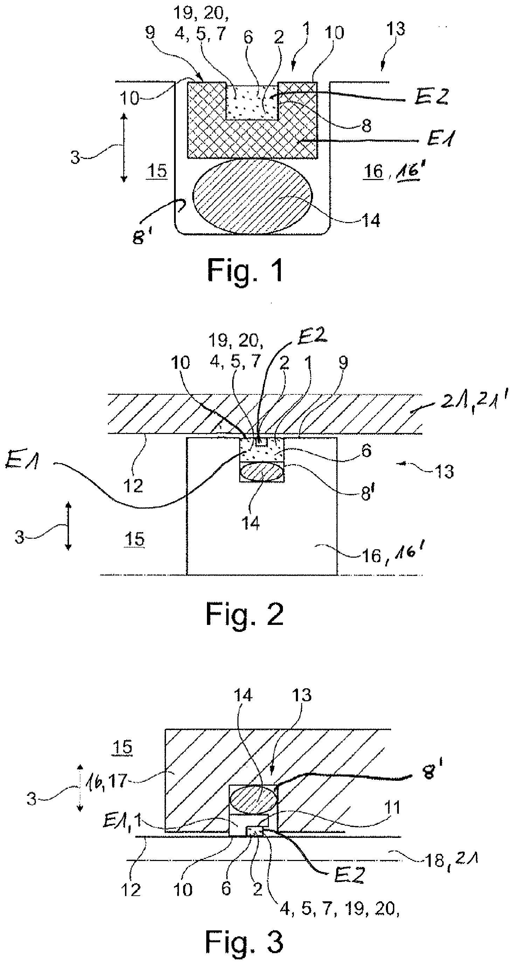

Entsprechend den Fig. 1 bis 5, weist ein erfindungsgemäßer Dichtring 1 eines translatorisch verstellbaren Bauelements 16, insbesondere eines Hydraulikkolbens 16', einen fest mit diesem verbundenen oder in diesem eingeschlossenen und aus laminierten Kohlefasern 4 aufgebauten Verstärkungsring 2 auf, der den Dichtring 1 in Radialrichtung 3 aussteift und eine Verformung zumindest einer Dichtlippe 10 in Radialrichtung 3 und/oder in Axialrichtung begrenzt. Rein theoretisch kann der Verstärkungsring 2 zusätzlich auch Aramidfasern 5, Glasfasern 19, Gesteinsfasern 20, insbesondere Basaltfasern, und/oder in Kunststoff 6 eingebettete Metallfasern 7 aufweisen.

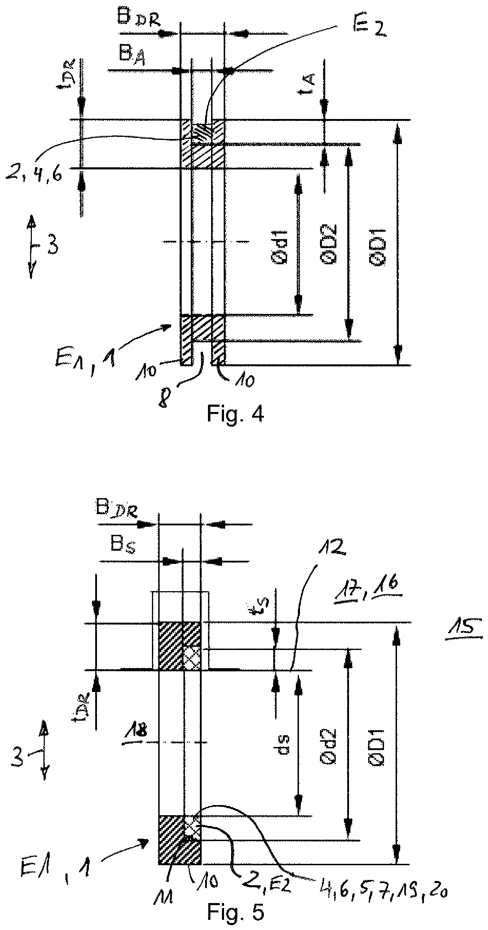

Über die Kohlefasern 4, welche sich üblicherweise in Umfangsrichtung des Dichtrings 1 erstrecken, können insbesondere radial auf den Dichtring 1 wirkende Kräfte in Umfangsrichtung umgelenkt und aufgenommen werden. Der Verstärkungsring 2 weist einen Elastizitätsmodul E2 auf. Die Kohlefasern 4 sind laminiert, das heißt der Verstärkungsring besitzt mehrere miteinander verklebte Schichten aus Kohlefasern 4. Der Dichtring 1 ist erfindungsgemäß aus einem Kunststoff mit einem Elastizitätsmodul E1 ausgebildet, wobei ein Verhältnis der E-Module 150 < E2/E1 < 300 beträgt. Durch den erfindungsgemäßen kohlefaserverstärkten Verstärkungsring 2 wird der Dichtring 1 an einer übermäßigen radialen Dehnung (vgl. die Fig. 1, 2 und 4) oder einer radialen Stauchung (vgl. die Fig. 3, 5) gehindert und dadurch der Verschleiß desselben im Vergleich zu herkömmlichen Dichtringen deutlich reduziert. Es ist somit möglich, auch bei sehr schlechter Schmierung im Kurzhubbereich oder bei langer Laufleistung den Verschleiß drastisch zu reduzieren. Eine Dichtwirkung des erfindungsgemäßen Dichtrings 1 ist dabei gegenüber einer Dichtwirkung von konventionellen Dichtringen nicht oder lediglich marginal eingeschränkt. Der Vorteil des erfindungsgemäßen Dichtrings 1 ist, dass bei kurzen Weg-Amplituden (kurze Verfahrwege) keine Mangelschmierung unter der Dichtlippe 10 und somit auch bei hoher Lastwechselzahl kein Verschleiß entsteht.

Der Elastizitätsmodul E1 des Kunststoffs des Dichtrings 1 beträgt ca. 600 MPa, wobei der Elastizitätsmodul E2 des Verstärkungsrings 2 in einem Bereich von 90.000 MPa < E2 < 180.000 MPa liegt. Hierdurch kann im Gebrauch die Dehnung des Dichtrings 1 bzw. seiner Dichtlippen 10, das heißt beispielsweise einen Anpressruck auf den Reibpartner (gegenüberliegende Dichtfläche 12), auf ein Maß begrenzt werden, welches einerseits eine zuverlässige Dichtung ermöglicht, andererseits jedoch einen Verschleiß erheblich reduziert. Der Verstärkungsring 2 ist dabei ein Kohlefasern 4 aufweisendes Laminat.

Betrachtet man dabei insbesondere den Dichtring 1 gemäß den Fig. 1, 2 und 4, so kann man erkennen, dass dieser eine U-förmige Ausnehmung 8 aufweist, in welcher der Verstärkungsring 2 formschlüssig und direkt benachbart zu den Dichtlippen 10 aufgenommen ist. Der Verstärkungsring 2 kann darüber hinaus in der Aufnahme 8 verklebt oder anderweitig befestigt sein, wobei selbstverständlich auch denkbar ist, dass der Verstärkungsring 2 bereits während des Herstellungsprozesses des Dichtrings 1 in das Material des Dichtrings 1 eingebettet wird und dadurch kraftschlüssig mit diesem verbunden ist. Die U-förmige Ausnehmung 8 kann dabei mittig an einer Außenfläche 9 des Dichtrings 1 angeordnet sein, so dass der Dichtring 1 gemäß den Fig. 1 und 2 demzufolge als außendichtender Dichtring 1 mit zwei Dichtlippen 10 ausgebildet ist.

Betrachtet man den gemäß den Fig. 3 und 5 dargestellten Dichtring 1, so kann man an diesem eine innenliegende Stufe 11 erkennen, auf welcher der faserverstärkte Verstärkungsring 2 angeordnet ist. Der gemäß den Fig. 3 und 5 dargestellte Dichtring 1 ist dabei als innendichtender und einfach wirkender Dichtring 1 mit lediglich einer Dichtlippe 10 ausgebildet. Die gemäß den Fig. 1 bis 5 dargestellten Ausführungsformen des Dichtrings 1 sollen dabei lediglich rein exemplarisch zu verstehen sein, so dass selbstverständlich auch weitere, nicht gezeigte Ausführungsformen des Dichtrings 1 von der Erfindung umfasst sein sollen, sofern diese zumindest den mit dem Dichtring 1 verbundenen oder in dessen Material eingeschlossenen Verstärkungsring 2 aufweisen, der den Dichtring 1 zumindest in radialer Richtung 3 aussteift.

Betrachtet man den Dichtring 1 gemäß der Fig. 4, so kann man erkennen, dass ein Verhältnis einer radialen Wanddicke t_{DR} des Dichtrings 1 zu einer radialen Tiefe t_{A} der Ausnehmung 8 im Bereich von 1,5 < t_{DR}/t_{A} < 2,3, insbesondere im Bereich von 1,7 < t_{DR}/t_{A} < 2,2 liegt. Zusätzlich oder alternativ liegt ein Verhältnis einer Breite B_{DR} des Dichtrings 1 zu einer Breite B_{A} der Ausnehmung 8 im Bereich von 1,0 < B_{DR}/B_{A} < 2,2, insbesondere im Bereich von 1,7 < B_{DR}/B_{A} < 2,0.

Betrachtet man den Dichtring 1 gemäß der Fig. 5, so kann man erkennen, dass ein Verhältnis einer radialen Wanddicke t_{DR} des Dichtrings 1 zu einer radialen Tiefe t_{S} der Stufe 11 im Bereich von 1,5 < t_{DR}/t_{S} < 2,3, insbesondere im Bereich von 1,7 < t_{DR}/t_{S} < 2,2 liegt. Zusätzlich oder alternativ liegt ein Verhältnis einer Breite B_{DR} des Dichtrings 1 zu einer Breite Bₛ der Stufe 11 im Bereich von 1,0 < B_{DR}/B_{S} < 2,2, insbesondere im Bereich von 1,7 < B_{DR}/B_{S} < 2,0.

Mittels dieser Verhältnisse lässt sich die Begrenzung der Verformung in einem Druckbereich eines Hydraulikmediums zwischen 20 und 350 bar optimal verwirklichen. Durch die genannten Abmessungen kann dabei erfindungsgemäß der Anpressdruck der Dichtlippen 10 an die gegenüberliegende Dichtfläche 12 auf ein Maß begrenzt werden, bei welchem die Dichtwirkung noch voll entfaltet, ein übermäßiger Verschleiß durch einen zu hohen Anpressdruck jedoch vermieden werden kann.

Der Verstärkungsring 2 kann dabei auch mittig in dem Dichtring 1 angeordnet, insbesondere von dem Material des Dichtrings 1 vollständig umschlossen sein, wodurch ein doppelwirkender Dichtring 1 entsteht.

Der Verstärkungsring 2 bei den Dichtringen 1 gemäß den Fig. 1, 2 und 4 ist dabei radial außen am Dichtring 1 angeordnet und steift somit den Dichtring 1 und die Dichtlippen 10 gegen einen Druck nach außen, hier nach oben, das heißt gegen ein radiales Dehnen, aus. Demgegenüber ist der Verstärkungsring 2 am Dichtring 1 gemäß den Fig. 3 und 5 innen angeordnet und steift den Dichtring 1 und die Dichtlippen 10 somit gegen eine radiale Stauchung aus.

Der Dichtring 1 selbst kann dabei aus nahezu beliebigen Materialen, vorzugsweise aus Polyurethan (PU), aus Polytetrafluorethylen (PTFE), Polyamid (PA), Polyethylen (PE) oder anderen thermoplastischen Werkstoffen ausgebildet sein, wobei Polyurethane Kunststoffe bzw. Kunstharze sind, die exzellente mechanische Eigenschaft und dadurch auch eine hohe Verschleißbeständigkeit aufweisen. Polytetrafluorethylen (PTFE) hingegen ist ein unverzweigtes, linear aufgebautes und teilkristallines Polymer aus Fluor und Kohlenstoff, welches eine extrem hohe chemische Beständigkeit und zudem auch eine hohe Verschleißbeständigkeit aufweist. Zudem besitzt ein aus PTFE ausgebildeter Verstärkungsring 2 exzellente Gleiteigenschaften, wodurch selbst bei einem mangelgeschmierten Gleitkontakt mit einer gegenüberliegenden Dichtfläche 12 eine nur geringe Reibung entsteht.

Eingesetzt wird der erfindungsgemäße Dichtring 1 in einer Dichtungsanordnung 13, wobei in dieser Dichtungsanordnung 13 zudem ein Elastomerring 14 vorgesehen ist, der den Dichtring 1 insbesondere gegen die Dichtfläche 12, beispielsweise eine Zylinderlauffläche, oder eine Kolbenstange 18 vorspannt und zwar gemäß den Fig. 1, 2 und 4 radial nach außen und gemäß den Fig. 3 und 5 radial nach innen.

Die Fig. 2 zeigt ein Hydraulikaggregat 15 mit einem in/an einem ersten Bauelement 21, hier einem Zylinder 21', translatorisch verstellbaren zweiten Bauelement 16, hier einem Hydraulikkolben 16', das eine Ausnehmung 8' aufweist, in welcher ein Dichtring 1 angeordnet ist. Mittels eines Elastomerrings 14 wird dabei der Dichtring 1 gegen eine Dichtfläche 12 des ersten Bauelements 21, das heißt des Zylinder 21' vorgespannt. Der Dichtring 1 und der Elastomerring 14 bilden dabei eine Dichtungsanordnung 13.

Entsprechend der Fig. 3 sind das erste Bauelement 21 als Kolbenstange 18 und das zweite Bauelement 16 als Verschluss 17 ausgebildet. Die Dichtungsanordnung 13 gemäß der Fig. 3 dichtet dabei den Verschluss 17 gegenüber der Kolbenstange 18 nach radial innen ab. Bereits diese nicht abschließende Aufzählung lässt erahnen, welche mannigfaltige Einsatzmöglichkeiten für den Dichtring 1 bzw. die Dichtungsanordnung 13 gegeben sind.

Der Elastomerring 14 kann aus Nitrilkautschuk (NBR), aus Fluorkautschuk (FKM), Ethylen-Propylen-Dien-Kautschuk (EPDM) oder Polyurethan (PU) ausgebildet sein. Die Vorteile der einzelnen Materialien beruhen zum Beispiel auf der chemischen Beständigkeit gegenüber den abzudichtenden Medien, sowie der Steuerung des Verschleißverhaltens und der Reibung.

Zusammenfassend lässt sich somit feststellen, dass mit dem erfindungsgemäßen Dichtring 1 eine sowohl dichtende als auch verschleißbeständige Abdichtung, insbesondere bei Hydraulikaggregaten 15 erreicht werden kann.

## Patentansprüche

1. Dichtring (1) eines translatorisch verstellbaren Bauelements(16), der zumindest eine Dichtlippe (10) und einen fest mit diesem verbundenen oder in diesem eingeschlossenen und faserverstärkten Verstärkungsring (2) aufweist, der den Dichtring (1) in Radialrichtung (3) aussteift und eine Verformung der zumindest einen Dichtlippe (10) in Radialrichtung begrenzt,
**dadurch gekennzeichnet,**
- **dass** der Verstärkungsring (2) laminierte Kohlefasern (4) aufweist und einen Elastizitätsmodul E2 besitzt,
- **dass** der Dichtring (1) aus einem Kunststoff mit einem Elastizitätsmodul E1 ausgebildet ist,
- **dass** ein Verhältnis der E-Module 150 < E2/E1 < 300 beträgt.

2. Dichtring nach Anspruch 1,
**dadurch gekennzeichnet,**
**dass** der Elastizitätsmodul E1 ca. 600 MPa beträgt.

3. Dichtring nach Anspruch 1 oder 2,
**dadurch gekennzeichnet,**
**dass** der Elastizitätsmodul E2 in einem Bereich von 90.000 MPa < E2 < 180.000 MPa liegt.

4. Dichtring nach einem der Ansprüche 1 bis 3,
**dadurch gekennzeichnet,**
**dass** der Dichtring (1) eine U-förmige Ausnehmung (8) aufweist, in welcher der Verstärkungsring (2) formschlüssig aufgenommen ist, wobei die Ausnehmung (8) zwischen zwei benachbarten Dichtlippen (10) angeordnet ist.

5. Dichtring nach Anspruch 4,
**dadurch gekennzeichnet,**
**dass** die U-förmige Ausnehmung (8) mittig an einer Außenfläche (9) des Dichtrings (1) angeordnet ist.

6. Dichtring nach Anspruch 4 oder 5,
**dadurch gekennzeichnet,**
**dass** ein Verhältnis einer radialen Wanddicke t_{DR} des Dichtrings (1) zu einer radialen Tiefe t_{A} der Ausnehmung (8) im Bereich von 1,5 < t_{DR}/t_{A} < 2,3, insbesondere im Bereich von 1,7 < t_{DR}/t_{A} < 2,2 liegt.

7. Dichtring nach einem der Ansprüche 4 bis 6,
**dadurch gekennzeichnet,**
**dass** ein Verhältnis einer Breite B_{DR} des Dichtrings (1) zu einer Breite B_{A} der Ausnehmung (8) im Bereich von 1,0 < B_{DR}/B_{A} < 2,2, insbesondere im Bereich von 1,7 < B_{DR}/B_{A} < 2,0 liegt.

8. Dichtring nach einem der Ansprüche 1 bis 3,
**dadurch gekennzeichnet,**
**dass** der Dichtring (1) eine einzige Dichtlippe (10) und eine innen oder außenliegende Stufe (11) aufweist, auf der der Verstärkungsring (2) benachbart zu der Dichtlippe (10) angeordnet ist.

9. Dichtring nach Anspruch 8,
**dadurch gekennzeichnet,**
**dass** ein Verhältnis einer radialen Wanddicke t_{DR} des Dichtrings (1) zu einer radialen Tiefe t_{S} der Stufe (11) im Bereich von 1,5 < t_{DR}/t_{S} < 2,3, insbesondere im Bereich von 1,7 < t_{DR}/t_{S} < 2,2 liegt.

10. Dichtring nach Anspruch 8 oder 9,
**dadurch gekennzeichnet,**
**dass** ein Verhältnis einer Breite B_{DR} des Dichtrings (1) zu einer Breite B_{S} der Stufe (11) im Bereich von 1,0 < B_{DR}/B_{S} < 2,2, insbesondere im Bereich von 1,7 < B_{DR}/B_{S} < 2,0 liegt.

11. Dichtring nach einem der Ansprüche 1 bis 10,
**dadurch gekennzeichnet,**
**dass** der Dichtring (1) aus Polytetrafluorethylen (PTFE), Polyoxymethylen (POM), Polyamid (PA), Polyethylen (PE), Polyurethan (PU) oder ultra-hochmolekularem Polyethylen (UHMW-PE) ausgebildet ist.

12. Hydraulikaggregat (15),
- mit einem in/an einem ersten Bauelement (21) translatorisch verstellbaren zweiten Bauelement (16), das eine Ausnehmung (8') aufweist, in welcher ein Dichtring (1) und nach einem der vorhergehenden Ansprüche angeordnet ist,
- mit einem Elastomerring (14) zur Vorspannung des Dichtrings (1) gegen eine Dichtfläche (12) des ersten Bauelements (21).

13. Hydraulikaggregat nach Anspruch 12,
**dadurch gekennzeichnet,**
- **dass** das erste Bauelement (21) als Zylinder (21') und das zweite Bauelement (16) als Kolben (16') ausgebildet sind, oder
- **dass** das erste Bauelement (21) als Kolbenstange (18) und das zweite Bauelement (16) als Verschluss (17) ausgebildet sind.

## Revendications

1. Bague d'étanchéité (1) d'une pièce (16) mobile en translation, qui présente au moins une lèvre d'étanchéité (10) et une bague de renforcement (2) reliée fixement à celle-ci ou renfermée dans celle-ci et renforcée par des fibres, qui renforce la bague d'étanchéité (1) dans la direction radiale (3) et limite une déformation de l'au moins une lèvre d'étanchéité (10) dans la direction radiale,
**caractérisée en ce**
- **que** la bague de renforcement (2) présente des fibres de carbone (4) stratifiées et un module d'élasticité E2,
- **que** la bague d'étanchéité (1) est réalisée à partir d'une matière plastique avec un module d'élasticité E1,
- **qu'**un rapport des modules d'élasticité est égal à 150 < E2/E1 < 300.

2. Bague d'étanchéité selon la revendication 1,
**caractérisée en ce**
**que** le module d'élasticité E1 est égal à environ 600 MPa.

3. Bague d'étanchéité selon la revendication 1 ou 2,
**caractérisée en ce**
**que** le module d'élasticité E2 se situe dans une plage de 90 000 MPa < E2 < 180 000 MPa.

4. Bague d'étanchéité selon l'une quelconque des revendications 1 à 3,
**caractérisée en ce**
**que** la bague d'étanchéité (1) présente un évidement (8) en forme de U, dans lequel la bague de renforcement (2) est logée par coopération de formes, dans laquelle l'évidement (8) est disposée entre deux lèvres d'étanchéité (10) voisines.

5. Bague d'étanchéité selon la revendication 4,
**caractérisée en ce**
**que** l'évidement (8) en forme de U est disposé de manière centrale sur une surface extérieure (9) de la bague d'étanchéité (1).

6. Bague d'étanchéité selon la revendication 4 ou 5,
**caractérisée en ce**
**qu'**un rapport d'une épaisseur de paroi radiale t_{DR} de la bague d'étanchéité (1) sur une profondeur radiale t_{A} de l'évidement (8) se situe dans la plage de 1,5 < t_{DR}/t_{A} < 2,3, en particulier dans la plage de 1,7 < t_{DR}/t_{A} < 2,2.

7. Bague d'étanchéité selon l'une quelconque des revendications 4 à 6,
**caractérisée en ce**
**qu'**un rapport d'une largeur B_{DR} de la bague d'étanchéité (1) sur une largeur B_{A} de l'évidement (8) se situe dans la plage de 1,0 < B_{DR/}B_{A} < 2,2, en particulier dans la plage de 1,7 < B_{DR/}B_{A} < 2,0.

8. Bague d'étanchéité selon l'une quelconque des revendications 1 à 3,
**caractérisée en ce**
**que** la bague d'étanchéité (1) présente une seule lèvre d'étanchéité (10) et un étage (11) situé à l'intérieur ou à l'extérieur, sur lequel la bague de renforcement (2) est disposée au voisinage de la lèvre d'étanchéité (10).

9. Bague d'étanchéité selon la revendication 8,
**caractérisée en ce**
**qu'**un rapport d'une épaisseur de paroi radiale t_{DR} de la bague d'étanchéité (1) sur une profondeur radiale t_{S} de l'étage (11) se situe dans la plage de 1,5 < t_{DR}/t_{S} < 2,3, en particulier dans la plage de 1,7 < t_{DR}/t_{S} < 2,2.

10. Bague d'étanchéité selon la revendication 8 ou 9,
**caractérisée en ce**
**qu'**un rapport d'une largeur B_{DR} de la bague d'étanchéité (1) sur une largeur B_{S} de l'étage (11) se situe dans la plage de 1,0 < B_{DR}/B_{S} < 2,2, en particulier dans la plage de 1,7 < B_{DR}/B_{S} < 2,0.

11. Bague d'étanchéité selon l'une quelconque des revendications 1 à 10,
**caractérisée en ce**
**que** la bague d'étanchéité (1) est réalisée à partir de polytétrafluoroéthylène (PTFE), de polyoxyméthylène (POM), de polyamide (PA), de polyéthylène (PE), de polyuréthane (PU) ou de polyéthylène de masse molaire très élevée (UHMW-PE).

12. Groupe hydraulique (15),
- avec une deuxième pièce (16) mobile en translation dans/sur une première pièce (21), qui présente un évidement (8') dans lequel est disposée une bague d'étanchéité (1) et selon l'une quelconque des revendications précédentes,
- avec une bague élastomère (14) destinée à précontraindre la bague d'étanchéité (1) contre une surface d'étanchéité (12) de la première pièce (21).

13. Groupe hydraulique selon la revendication 12,
**caractérisé en ce**
- **que** la première pièce (21) est réalisée en tant que cylindre (21') et la deuxième pièce (16) en tant que piston (16'), ou
- **que** la première pièce (21) est réalisée en tant que tige de piston (18) et la deuxième pièce (16) en tant que fermeture (17).

## Claims

1. Sealing ring (1) of a translationally adjustable component (16) which has at least one sealing lip (10) and a fibre-reinforced reinforcing ring (2) securely connected with said sealing lip or enclosed therein, which reinforcing ring reinforces the sealing ring (1) in radial direction (3) and limits a deformation of the at least one sealing lip (10) in radial direction,
**characterised in**
- **that** the reinforcing ring (2) has laminated carbon fibres (4) and possesses a modulus of elasticity E2,
- **that** the sealing ring (1) is formed from a plastic having a modulus of elasticity E1,
- **that** a ratio of the modulus of elasticity is 150 < E2/E1 < 300.

2. Sealing ring according to claim 1,
**characterised in**
**that** the modulus of elasticity E1 is approximately 600 MPa.

3. Sealing ring according to claim 1 or 2,
**characterised in**
**that** the modulus of elasticity E2 lies in a range of 90,000 MPa < E2 < 180,000 MPa.

4. Sealing ring according to any of claims 1 to 3,
**characterised in**
**that** the sealing ring (1) has a U-shaped recess (8) in which the reinforcing ring (2) is form-fittingly accommodated, wherein the recess (8) is disposed between two adjacent sealing lips (10).

5. Sealing ring according to claim 4,
**characterised in**
**that** the U-shaped recess (8) is disposed centrally on an outer surface (9) of the sealing ring (1).

6. Sealing ring according to claim 4 or 5,
**characterised in**
**that** a ratio of a radial wall thickness t_{DR} of the sealing ring (1) to a radial depth t_{A} of the recess (8) lies in the range from 1.5 < t_{DR}/t_{A} < 2.3, in particular in the range from 1.7 < t_{DR}/t_{A} < 2.2.

7. Sealing ring according to any of claims 4 to 6,
**characterised in**
**that** a ratio of a breadth B_{DR} of the sealing ring (1) to a breadth B_{A} of the recess (8) lies in the range from 1.0 < B_{DR}/B_{A} < 2.2, in particular in the range from 1.7 < B_{DR}/B_{A} < 2.0.

8. Sealing ring according to any of claims 1 to 3,
**characterised in**
**that** the sealing ring (1) has one single sealing lip (10) and an internal or external step (11) on which the reinforcing ring (2) is disposed adjacent to the sealing lip (10).

9. Sealing ring according to claim 8,
**characterised in**
**that** a ratio of a radial wall thickness t_{DR} of the sealing ring (1) to a radial depth t_{S} of the step (11) lies in the range from 1.5 < t_{DR}/t_{S} < 2.3, in particular in the range from 1.7 < t_{DR}/t_{S} < 2.2.

10. Sealing ring according to claim 8 or 9,
**characterised in**
**that** a ratio of a breadth B_{DR} of the sealing ring (1) to a breadth B_{S} of the step (11) lies in the range from 1.0 < B_{DR}/B_{S} < 2.2, in particular in the range from 1.7 < B_{DR}/B_{S} < 2.0.

11. Sealing ring according to any of claims 1 to 10,
**characterised in**
**that** the sealing ring (1) is formed from polytetrafluoroethylene (PTFE), polyoxymethylene (POM), polyamide (PA), polyethylene (PE), polyurethane (PU) or ultra high molecular weight polyethylene (UHMW-PE).

12. Hydraulic assembly (15)
- having a second component (16) translationally adjustable in/on a first component (21), which second component has a recess (8') in which a sealing ring (1) and according to any of the preceding claims is disposed,
- having an elastomer ring (14) for pre-tensioning the sealing ring (1) against a sealing surface (12) of the first component (21).

13. Hydraulic assembly according to claim 12,
**characterised in**
- **that** the first component (21) is formed as a cylinder (21') and the second component (16) is formed as a piston (16'), or
- **that** the first component (21) is formed as a piston rod (18) and the second component (16) is formed as a closure (17).
